# EUROPÄISCHE PATENTSCHRIFT

(11) **EP 2 374 519 B1**
(45) Veröffentlichungstag und Bekanntmachung des Hinweises auf die Patenterteilung: **19.02.2014**
(21) Anmeldenummer: 10196696.8
(22) Anmeldetag: 23.12.2010
(51) Int. Cl.: B01D 35/147, B01D 36/00

(54) **Flüssigkeitsfilter und Betriebsverfahren**
Liquid filter and operating method
Filtre pour liquides et méthode d'utilisation

(30) Priorität: 27.01.2010 DE 102010005817
(43) Veröffentlichungstag der Anmeldung: 12.10.2011
(73) Patentinhaber: MAHLE International GmbH, 70376 Stuttgart (DE)
(72) Erfinder: Gröner, Alfred, 74613, Öhringen (DE); Steiner, Gerhard, 74613 Öhringen (DE)
(74) Vertreter: BRP Renaud & Partner

(56) Entgegenhaltungen:
- EP-A1- 1 935 468
- US-A- 4 865 632

## Beschreibung

Die vorliegende Erfindung betrifft ein Flüssigkeitsfilter, insbesondere ein Ölfilter, mit den Merkmalen des Oberbegriffs des Anspruchs 1. Die Erfindung betrifft außerdem ein Verfahren zum Betreiben eines derartigen Flüssigkeitsfilters.

Üblicherweise umfasst ein Flüssigkeitsfilter ein Gehäuse, das einen Aufnahmeraum zur Aufnahme eines Filterelements sowie einen Ablauf für reinseitige Flüssigkeit aufweist. Dabei trennt das Filterelement im Gehäuse eine Rohseite von einer Reinseite.

Derartige Flüssigkeitsfilter können beispielsweise in Hydrauliksystemen, insbesondere in Schmierölsystemen, zur Anwendung kommen, die mit einem Flüssigkeitskreis oder Hydraulikkreis arbeiten. Üblicherweise sind dabei Luftpolster oder Gaspolster im Hydrauliksystem unerwünscht, da sie die Funktion der einzelnen Komponenten des Hydrauliksystems beeinträchtigen können oder sogar zu Störungen führen können. Beispielsweise verhindert die Kompressibilität von Gaseinschlüssen in der Flüssigkeit die exakte Ansteuerung hydraulischer Kraftübertragung sowie hydraulischer Positionierung von Arbeitszylindern. Bei hohen Drücken können auch Mikrodieseleffekte zu erhöhtem Verschleiß in einzelnen Bauteilen, wie zum Beispiel Steuerventilen, führen. Ebenso kann dies zu einer verfrühten Alterung des Hydraulikmediums beitragen. Des Weiteren kann ein Gaseintrag in ein Schmiersystem zum Abriss des Schmierfilms führen, was einen erhöhten Verschleiß von Lagern, Führungen und dergleichen zur Folge hat.

Bei größer dimensionierten Flüssigkeitsfiltern ist es üblich, das Gehäuse stehend, also im Wesentlichen mit vertikaler Längsmittelachse, zu montieren, da dann eine Wartung, insbesondere ein Wechsel, des jeweiligen Filterelements vereinfacht ist. Üblicherweise wird hierzu ein Deckel des Gehäuses entfernt, wodurch ein Zugriff zum Filterelement möglich wird. Das Filterelement wird ausgetauscht und der Deckel wieder aufgesetzt. Da sich ein rohseitiger Zulauf und ein reinseitiger Ablauf des Gehäuses zweckmäßig distal zum Deckel befinden, kann sich im oben liegenden Deckel Gas ansammeln, was zu einem unerwünschten Gaspolster im Flüssigkeitsfilter und somit im Hydrauliksystem führt. Zum Entfernen derartiger störender Gaspolster ist es grundsätzlich möglich, an den Deckel eine Entlüftungseinrichtung anzuschließen, die bevorzugt automatisch die Entlüftung bzw. Entgasung des Filtergehäuses und somit eine Entfernung des Gaspolsters bewirken kann. Derartige Entlüftungs- bzw. Entgasungseinrichtungen sind vergleichsweise aufwändig. Ferner sind sie verschleißanfällig, so dass sie ausfallen können und eine zuverlässige Entfernung des Gaspolsters nicht gewährleistet ist.

Aus der DE 197 16 085 A1 und aus der EP 1 935 468 A1 ist jeweils ein Flüssigkeitsfilter bekannt, das zur Entgasung eine Drosselbohrung enthält, die einen rohseitigen Gassammelraum mit einem relativ drucklosen Rücklauf verbindet. Im Betrieb des Flüssigkeitsfilters führt der Öldruck auf der Rohseite das Gas durch die Drosselbohrung in den Rücklauf aus. Anschließend kommt es dann zu einer tolerierbaren Leckage von rohseitigem Öl durch die Drosselbohrung in den Rücklauf.

Aus der US 4,865,632 ist ein Separator für gasförmige und feste Verunreinigungen in einer Flüssigkeit bekannt, der ein Filterelement und stromab davon einen Zyklon umfasst, der in seinem Zentrum ein Rücklaufrohr enthält, das zu einem relativ drucklosen Flüssigkeitstank zurückführt. Das Filterelement scheidet die festen Verunreinigungen ab. Der Zyklon scheidet die gasförmigen Verunreinigungen ab. Von Gas gereinigte Flüssigkeit kann durch eine perforierte Wand des Zyklons in die Reinseite austreten. Mit Gas angereicherte Flüssigkeit kann durch eine perforierte Wand des Rücklaufrohrs in dasselbe eintreten und in den rohseitigen Flüssigkeitstank zurückfließen.

Hier setzt die vorliegende Erfindung an. Sie beschäftigt sich mit dem Problem, für ein Flüssigkeitsfilter bzw. für ein zugehöriges Betriebsverfahren eine verbesserte Ausführungsform anzugeben, die sich insbesondere durch eine zuverlässig arbeitende Entgasung auszeichnet, die außerdem vergleichsweise preiswert realisierbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine aufgrund der Strömungsverhältnisse im Flüssigkeitsfilter entstehende Druckdifferenz zur Realisierung einer Gasabsaugung auszunutzen. Dieser Gedanke nutzt die Erkenntnis, dass das Filterelement einen deutlich größeren durchströmbaren Querschnitt besitzt als der Ablauf, so dass im Ablauf eine höhere Strömungsgeschwindigkeit herrscht als stromauf davon. Insbesondere nimmt bei einem zylindrischen Filterelement, das mit der einen axialen Stirnseite proximal zum Ablauf angeordnet ist, während die andere axiale Stirnseite distal zum Ablauf angeordnet ist, die Strömungsgeschwindigkeit in der Flüssigkeit mit zunehmendem Abstand vom Ablauf ab. Entsprechend den Bernoulli'schen Strömungsgesetzen nimmt der statische Druck in einem strömenden Fluid mit zunehmender Geschwindigkeit ab. Das bedeutet, dass im Flüssigkeitsfilter distal zum Ablauf aufgrund der sehr geringen Strömungsgeschwindigkeit ein relativ hoher statischer Druck herrscht, während im Ablauf aufgrund der vergleichsweise hohen Strömungsgeschwindigkeit ein relativ niedriger statischer Druck herrscht. Durch eine geeignete Einbausituation des Gehäuses kann nun der Gassammelraum in den Bereich mit dem hohen Druck gelegt werden. Mit Hilfe wenigstens einer Verbindungsleitung kann dann der Gassammelraum, in dem der relativ hohe statische Druck herrscht, fluidisch mit dem Ablauf bzw. mit einem im Ablauf liegenden Bereich verbunden werden, wo sich im Betrieb des Flüssigkeitsfilters bzw. des Hydrauliksystems aufgrund der erhöhten Strömungsgeschwindigkeit der niedrige statische Druck einstellt. Über die Verbindungsleitung kann nun das Gas in die strömende Flüssigkeit gelangen und abtransportiert werden. Die Flüssigkeit kann dann im Hydrauliksystem in einer beruhigten Zone, zum Beispiel in einem Flüssigkeitstank, einfach entgast werden. Die Erfindung arbeitet somit nach dem Venturi-Prinzip zur Entgasung des Flüssigkeitsfilters. Die Entgasung erfolgt ohne bewegliche Teile und ohne Fremdenergie. Sie ist daher einfach realisierbar und zeichnet sich durch einen geringen Verschleiß und eine hohe Funktionssicherheit bzw. Zuverlässigkeit aus.

Die Verbindungsleitung verbindet im Flüssigkeitsfilter zumindest eine Ansaugöffnung mit wenigstens einer Austrittsöffnung fluidisch bzw. hydraulisch. Die wenigstens eine Ansaugöffnung ist dabei auf der Reinseite des Gehäuses angeordnet und zwar in einem Bereich des Gehäuses, der sich im Einbauzustand des Flüssigkeitsfilters oben befindet. Mit anderen Worten, die wenigstens eine Ansaugöffnung befindet sich im Gassammelraum des Gehäuses. Im Unterschied dazu ist die wenigstens eine Austrittsöffnung im Bereich des Ablaufs angeordnet, das heißt, die wenigstens eine Austrittsöffnung mündet in den Ablauf. Dieser Ablauf befindet sich im Einbauzustand in einem unteren Bereich des Gehäuses. Auf diese Weise kann besonders einfach die Absaugung mit Hilfe des Venturi-Prinzips realisiert werden. Von besonderer Bedeutung ist dabei, dass sich sowohl die jeweilige Ansaugöffnung als auch die jeweilige Austrittsöffnung auf der Reinseite befinden, so dass auch für den Fall, dass angesammeltes Gas vollständig abgesaugt ist und in der Folge Flüssigkeit abgesaugt wird, keine Fehlströmung entsteht, da lediglich "langsame" gefilterte Flüssigkeit mit "schneller" gefilterter Flüssigkeit vermischt wird.

Entsprechend einer vorteilhaften Ausführungsform kann sich die wenigstens eine Ansaugöffnung im Bereich einer im montierten Zustand oberen Endscheibe des zylindrischen oder ringförmigen Filterelements befinden, während sich die wenigstens eine Austrittsöffnung im Bereich einer unteren Endscheibe des Filterelements befindet. Bei derartigen zylindrischen Filterelementen ist zusätzlich zu beobachten, dass die Strömungsgeschwindigkeit in der Flüssigkeit im Bereich der unteren Endscheibe am Größten ist, während sie im Bereich der oberen Endscheibe am Geringsten ist, so dass bereits innerhalb des Filterelements ein Geschwindigkeitsgefälle bzw. ein Druckgefälle entsteht, das zur Absaugung genutzt werden kann.

Das Gehäuse des Flüssigkeitsfilters kann entsprechend einer bevorzugten Ausführungsform unten einen den Ablauf aufweisenden Sockel und oben einen Deckel zum Verschließen des Gehäuses aufweisen. Eine derartige Bauform vereinfacht die Wartung bzw. das Austauschen eines Filterelements.

Dabei kann es zweckmäßig sein, den Deckel mit Hilfe einer Verankerung am Sockel zu befestigen, wobei sich diese Verankerung zentral, insbesondere koaxial, im Filterelement erstrecken kann. Entsprechend einer bevorzugten Ausführungsform kann vorgesehen sein, die Ansaugöffnung, die Austrittsöffnung und die Verbindungsleitung in der Verankerung auszubilden. Mit anderen Worten, die Gasabsaugung wird in ohnehin vorhandene Komponenten des Gehäuses integriert. Des Weiteren kann eine herkömmliche Verankerung durch eine mit der Gasabsaugung ausgestattete Verankerung ersetzt werden, wodurch auch eine Nachrüstung vorhandener Flüssigkeitsfilter möglich ist, um die erfindungsgemäße Gasabsaugung zu integrieren.

Gemäß einer anderen Ausführungsform kann auch vorgesehen sein, die Ansaugöffnung, die Austrittsöffnung und die Verbindungsleitung unmittelbar am Filterelement auszubilden. Mit anderen Worten, die Gasabsaugung ist in das jeweilige Filterelement integriert bzw. darin eingebaut oder daran angebaut. Beispielsweise kann eine Innenzarge des Filterelements die Verbindungsleitung enthalten sowie die Austrittsöffnung und die Ansaugöffnung aufweisen. Alternativ ist es ebenso möglich, die Ansaugöffnung, die Austrittsöffnung und die Verbindungsleitung in einem Entgasungseinsatz zu realisieren, der an das Filterelement angebaut bzw. darin eingebaut ist. Beispielsweise kann ein derartiger Entgasungseinsatz in eine Innenzarge des Filterelements eingeclipst werden. Durch die vorstehenden Ausführungsformen kann die erfindungsgemäß vorgeschlagene Entgasung besonders einfach nachgerüstet werden, indem anstelle eines herkömmlichen Filterelements das mit der Entgasung bzw. der Entgasungseinrichtung bzw. mit dem Entgasungseinsatz ausgestattete Filterelement eingesetzt wird.

Gemäß einer anderen vorteilhaften Ausführungsform kann im Gehäuse ein Bypassraum ausgebildet sein, der mit der Reinseite direkt fluidisch verbunden ist und der mit der Rohseite über ein Bypassventil fluidisch verbunden ist. Mit Hilfe eines derartigen steuerbaren Bypasses kann für den Fall, dass ein zu großer Differenzdruck zwischen Rohseite und Reinseite entsteht, eine Druckentlastung herbeigeführt werden, die eine Zerstörung des Filterelements und/oder eine Unterversorgung des Hydrauliksystems mit Hydraulikfluid vermeidet. Eine überhöhte Druckdifferenz zwischen Rohseite und Reinseite kann insbesondere dann entstehen, wenn das Filterelement aufgrund rohseitiger Schmutzanlagerungen weitgehend zugesetzt ist.

Besonders vorteilhaft ist es, einen derartigen Bypassraum im Deckel des Gehäuses auszubilden, wobei insbesondere vorgesehen sein kann, auch das Bypassventil am Deckel anzuordnen. Hierdurch wird eine zusätzliche Funktionalität in den Deckel integriert. Bei einer Wartung des Flüssigkeitsfilters wird dadurch auch eine Funktionskontrolle des Bypassventils einfach möglich. Besonders zweckmäßig ist es nun, die Ansaugöffnung der Entgasungseinrichtung im Bypassraum zu positionieren, so dass die Verbindungsleitung über die Ansaugöffnung im Bypassraum mündet. Auf diese Weise wird der ohnehin im Deckel vorhandene Bypassraum als Gassammelraum genutzt und zur Absaugung des sich gegebenenfalls bildenden Gaspolsters genutzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

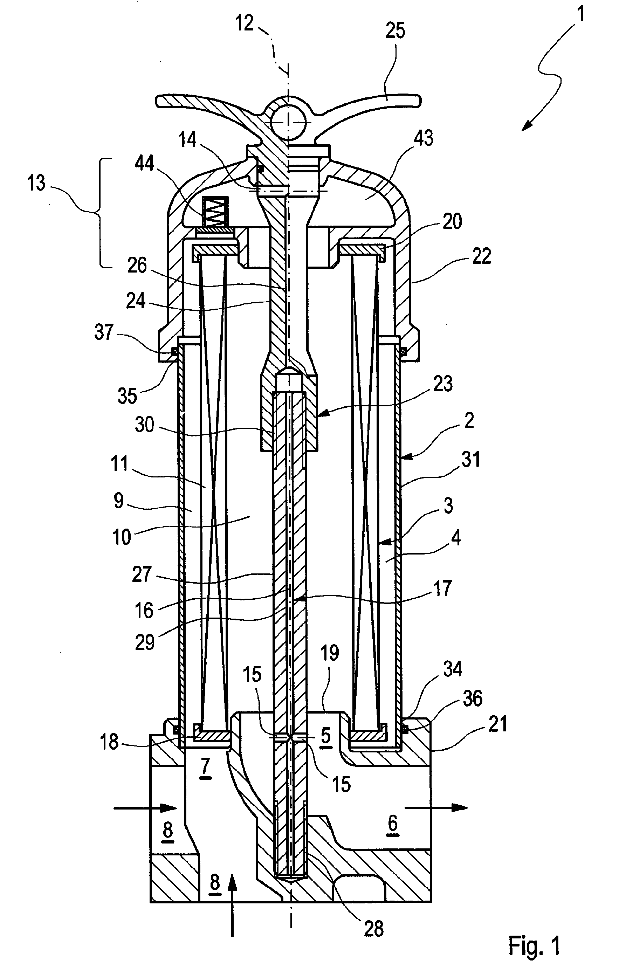

Es zeigen, jeweils schematisch
- Fig. 1-3: jeweils einen stark vereinfachten Längsschnitt eines Flüssigkeitsfilters, bei verschiedenen Ausführungsformen.

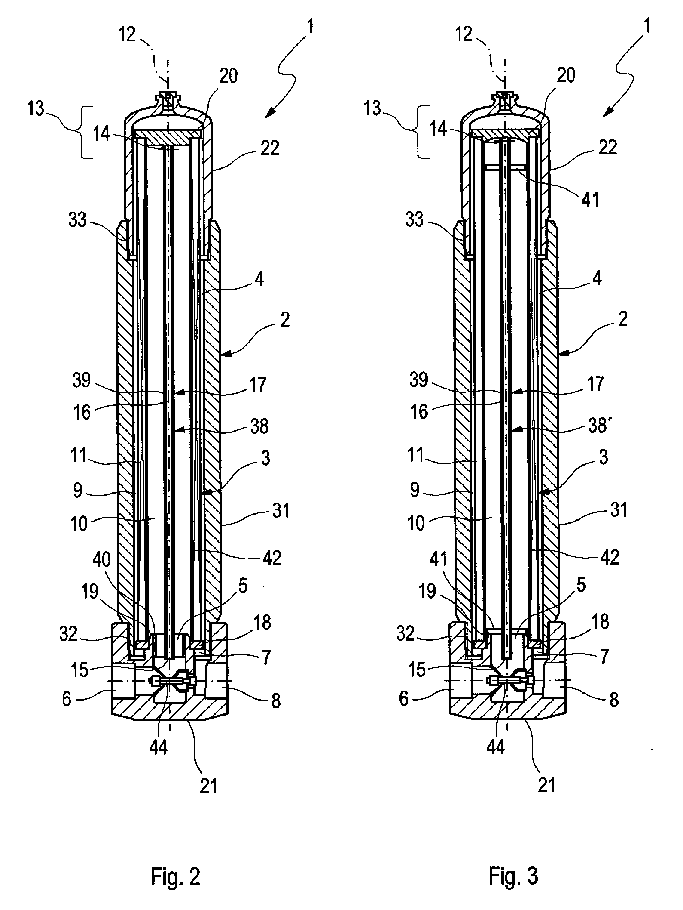

Entsprechend den Figuren 1-3 umfasst ein Flüssigkeitsfilter 1, bei dem es sich bevorzugt um ein Ölfilter handeln kann, ein Gehäuse 2 sowie ein Filterelement 3. Das Gehäuse 2 umschließt einen Aufnahmeraum 4 zur Aufnahme des Filterelements 3 und weist einen Ablauf 5 auf, durch den reinseitige Flüssigkeit aus dem Aufnahmeraum 4 herausgeführt wird. Ein mit dem Ablauf 5 verbundener Ablaufkanal 6 führt die reinseitige Flüssigkeit aus dem Gehäuse 2 ab. Ferner weist das Gehäuse 2 einen rohseitigen Zulauf 7 auf, durch den rohseitige Flüssigkeit in den Aufnahmeraum 4 eintreten kann. Der Zulauf 7 ist mit wenigstens einem Zulaufkanal 8 verbunden, über den die rohseitige Flüssigkeit in das Gehäuse 2 gelangt und zum Zulauf 7 geführt ist. Bei der in Fig. 1 gezeigten Ausführungsform sind zwei derartige Zulaufkanäle 8 vorgesehen, die sich am Zulauf 7 vereinen. Im Unterschied dazu zeigen die Figuren 2 und 3 je eine Ausführungsform mit nur einem einzigen Zulaufkanal 8.

Das Filterelement 3 trennt im Gehäuse 2 bzw. im Aufnahmeraum 4 eine Rohseite 9 von einer Reinseite 10. Die Rohseite 9 kommuniziert mit dem Zulauf 7, während die Reinseite 10 mit dem Ablauf 5 kommuniziert. Im Beispiel ist das Filterelement 3 mit einem ringförmigen Filterkörper 11 ausgestattet, der sich bezüglich einer Längsmittelachse 12 zylindrisch bzw. koaxial erstreckt. Das Gehäuse 2 ist innerhalb des jeweiligen Hydrauliksystems so eingebaut, dass der Filterkörper 11 im Einbauzustand bezüglich seiner Längsmittelachse 12 im Wesentlichen stehend angeordnet ist. Bei einer derartigen stehenden Anordnung erstreckt sich die Längsmittelachse 12 des Filterelements 3 im Wesentlichen vertikal, also im Wesentlichen parallel zur Schwerkraftrichtung. Es ist klar, dass grundsätzlich auch kleinere Neigungen der Längsmittelachse 12 gegenüber der Schwerkraftrichtung bzw. gegenüber der Vertikalrichtung ebenfalls als stehende Anordnung aufgefasst werden, solange die Neigung gegenüber der Vertikalrichtung nicht größer als 45° ist. Bevorzugt ist jedoch die weitgehend parallele Ausrichtung der Längsmittelachse 12 zur Vertikalrichtung.

Das Filterelement 3 ist bei den hier gezeigten Ausführungsformen bezüglich seiner Längsmittelachse 12 radial von außen nach innen durchströmt, so dass sich die Reinseite 10 im Inneren des Filterkörpers 11 befindet, während die Rohseite 9 den Filterkörper 11 umhüllt.

Beim erfindungsgemäßen Flüssigkeitsfilter ist in einem oberen Bereich 13 des Gehäuses 2 zumindest eine Ansaugöffnung 14 vorgesehen. Der obere Bereich 13, der in den Figuren 1-3 durch eine geschweifte Klammer gekennzeichnet ist, befindet sich im Gehäuse 2 im Einbauzustand oben. Die jeweilige Ansaugöffnung 14 ist dabei auf der Reinseite 10, also reinseitig angeordnet. Des Weiteren ist im Bereich des Ablaufs 5 zumindest eine Austrittsöffnung 15 vorgesehen. Die jeweilige Austrittsöffnung 15 befindet sich dabei ebenfalls auf der Reinseite 10. Ferner ist zumindest eine Verbindungsleitung 16 vorhanden, die eine fluidische Verbindung zwischen der wenigstens einen Ansaugöffnung 14 und der wenigstens einen Austrittsöffnung 15 herstellt.

Unabhängig von den gezeigten Ausführungsformen ist das Flüssigkeitsfilter 1 mit einer Entgasungseinrichtung 17 ausgestattet, welche die wenigstens eine Ansaugöffnung 14, die wenigstens eine Austrittsöffnung 15 und die wenigstens eine Verbindungsleitung 16 umfasst, welche die jeweilige Ansaugöffnung 14 mit der jeweiligen Austrittsöffnung 15 fluidisch verbindet. Bei stehend montiertem Filterelement 3 und bei einem unten angeordneten Ablauf 5 arbeitet die hier vorgestellte Entlüftungs- bzw. Entgasungseinrichtung 17 nach dem Venturi-Prinzip. Die oben angeordnete Ansaugöffnung 14 befindet sich einerseits in einem Bereich, in dem sich Gas zwangsläufig ansammelt und andererseits in einem vom unten liegenden Ablauf 5 entfernten Bereich, in dem eine deutlich geringere Strömungsgeschwindigkeit als im Ablauf 5 herrscht. In der Folge herrscht im Bereich der Ansaugöffnung 14 statisch ein höherer Druck als im Ablauf 5. Die Positionierung der Austrittsöffnung 15 im Ablauf 5 ermöglicht es in Verbindung mit der Verbindungsleitung 16, die Druckdifferenz zwischen Ansaugöffnung 14 und Austrittsöffnung 15 zum Absaugen des Gases aus dem oberen Bereich 13 zu nutzen und um das abgesaugte Gas im Bereich des Ablaufs 5 in die Flüssigkeitsströmung einzuleiten. Hierdurch können die abgesaugten Gase durch den jeweiligen Ablaufkanal 6 aus dem Gehäuse 2 abgeführt werden. An einer anderen Stelle des Hydrauliksystems lässt sich das mitgeführte Gas einfach aus der Flüssigkeit ausgasen, beispielsweise in einer beruhigten Zone, vorzugsweise in einem Flüssigkeitstank.

Zur Realisierung der Entgasungseinrichtung 17 ist die Austrittsöffnung 15 zweckmäßig im Bereich einer unteren Endscheibe 18 des Filterelements 3 angeordnet. Die untere Endscheibe 18 bildet einen axialen Abschluss des Filterelements 3 und ist am Filterkörper 11 bzw. am Filtermaterial befestigt. Bei den hier gezeigten Ausführungsformen ist das Filterelement 3 im Bereich seiner unteren Endscheibe 18 außen auf einen Ablaufstutzen 19 aufgesteckt, der den Ablauf 5 umschließt bzw. bildet. Der Ablauf 5 befindet sich somit axial auf Höhe der unteren Endscheibe 18. Ebenfalls befindet sich die jeweilige Austrittsöffnung 15 axial auf Höhe des Ablaufs 5 bzw. auf Höhe der unteren Endscheibe 18.

Die Ansaugöffnung 14 ist zweckmäßig im Bereich einer oberen Endscheibe 20 des Filterelements 3 angeordnet. Die obere Endscheibe 20 dient am anderen axialen Ende des Filterelements 3 zum Abschluss des Filterkörpers 11 und ist dort mit dem Filterkörper 11 bzw. mit dem Filtermaterial fest verbunden. Bei der in Fig. 1 gezeigten Ausführungsform ist die jeweilige Austrittsöffnung 14 oberhalb der oberen Endscheibe 20 angeordnet. Bei den Ausführungsformen der Fig. 2 und 3 befindet sich die Austrittsöffnung 14 innerhalb des Filterelements 3 und zwar direkt unterhalb der oberen Endscheibe 20, die dort geschlossen ausgebildet ist.

Das Gehäuse 2 kann entsprechend einer bevorzugten Ausführungsform unten einen Sockel 21 und oben einen Deckel 22 aufweisen. Der Sockel 21 enthält den Ablauf 5 und den Zulauf 7. Ebenso sind bei den hier gezeigten Ausführungsformen der jeweilige Zulaufkanal 8 und der Ablaufkanal 6 im Sockel 21 ausgebildet. Der Deckel 22 dient zum Verschließen des Gehäuses 2. Er kann abgenommen werden, um das Gehäuse 2 zu öffnen bzw. um einen Zugang zum Filterelement 3 zu ermöglichen. Bei geöffnetem Gehäuse 2 bzw. bei entferntem Deckel 22 kann zum Beispiel das Filterelement 3 ausgetauscht werden.

Bei der in Fig. 1 gezeigten Ausführungsform ist der Deckel 22 mit Hilfe einer Verankerung 23 am Sockel 21 befestigt. Die Verankerung 23 erstreckt sich dabei zentral im Filterelement 3. Bevorzugt wird dabei die hier gezeigte koaxiale Positionierung der Verankerung 23 zum Filterelement 3. Zweckmäßig ist nun die Entgasungseinrichtung 17 in die Verankerung 23 integriert. Hierzu sind die Ansaugöffnung 14, die Austrittsöffnung 15 und die Verbindungsleitung 16 in der Verankerung 23 ausgebildet.

Im gezeigten Beispiel der Fig. 1 umfasst die Verankerung 23 einen am Deckel 22 drehbar gelagerten Knebel 24, der ein Betätigungselement 25 aufweist. Das Betätigungselement 25 ist dabei an einer vom Aufnahmeraum 4 abgewandten Außenseite des Deckels 22 angeordnet und dient zum Einleiten von Drehmoment in den Knebel 24. Im gezeigten Beispiel ist das Betätigungselement 25 als Handgriff ausgestaltet, um manuell ein Drehmoment zum Drehen des Knebels 24 einleiten zu können. Zusätzlich oder alternativ kann das Betätigungselement 25 einen hier nicht gezeigten Werkzeugeingriff aufweisen, über den mit Hilfe eines entsprechenden Werkzeugs ein Drehmoment zum Drehen des Knebels 24 eingeleitet werden kann. Der Knebel 24 enthält bei der hier gezeigten Ausführungsform einen zur Ansaugöffnung 14 führenden Abschnitt 26 der Verbindungsleitung 16. Die Verankerung 23 umfasst hier außerdem eine Zugstange 27, die am Sockel 21 befestigt ist. Beispielsweise ist die Zugstange 27 über eine Gewindeverbindung 28 fest mit dem Sockel 21 verschraubt. Die Zugstange 27 enthält hier einen zur Austrittsöffnung 15 führenden Abschnitt 29 der Verbindungsleitung 16. Knebel 24 und Zugstange 27 sind so miteinander verbunden, dass die beiden Abschnitte 26 und 29 der Verbindungsleitung 16 fluidisch miteinander verbunden sind und nach außen, also zur Reinseite 10 hin abgedichtet sind. Beispielsweise sind Knebel 24 und Zugstange 27 über eine Schraubverbindung 30 fest miteinander verbunden bzw. miteinander verschraubt.

Bei der in Fig. 1 gezeigten Ausführungsform umfasst das Gehäuse 2 außerdem eine Mantelhülse 31, über welche der Deckel 22 am Sockel 21 abgestützt ist und welche die mit Hilfe der Verankerung 23 zwischen Deckel 22 und Sockel 21 erzeugte Zugspannung als Druckkraft zwischen Deckel 22 und Sockel 21 abstützt.

Die in den Fig. 2 und 3 gezeigten Ausführungsformen kommen ohne eine Verankerung 23 aus. Dort ist die Mantelhülse 31 ausreichend stabil ausgestaltet, um auch über die Mantelhülse 31 die im Betrieb auftretenden Druckkräfte aufnehmen zu können. Hierzu ist die Mantelhülse 31 über eine Verschraubung 32 am Sockel 21 befestigt und über eine Verschraubung 33 fest mit dem Deckel 22 verbunden. Zur Realisierung dieser Verschraubungen 32, 33 benötigt die Mantelhülse 31 bei diesen Ausführungsformen eine entsprechende Wandstärke. Im Unterschied dazu zeigt Fig. 1 eine Mantelhülse 31 mit deutlich reduzierter Wandstärke. Die Verbindung mit dem Sockel 21 bzw. mit dem Deckel 22 erfolgt dort über Steckverbindungen 34 bzw. 35, die entsprechend einfach abgedichtet werden können, beispielsweise mittels Radialdichtungen 36 bzw. 37.

Bei der in Fig. 2 gezeigten Ausführungsform ist die Entgasungseinrichtung 17 mit Hilfe eines Entgasungseinsatzes 38. realisiert, der in das Gehäuse 2 eingebaut ist. Der Entgasungseinsatz 38 umfasst die Ansaugöffnung 14, die Austrittsöffnung 15 und die Verbindungsleitung 16. Zur Realisierung der Verbindungsleitung 16 ist ein Steigrohr 39 vorgesehen, das mit Hilfe einer Buchse 40 in den Ablaufstutzen 19 eingesetzt ist, unten die Austrittsöffnung 15 aufweist und oben die Ansaugöffnung 14 besitzt. Das Steigrohr 39 endet dabei nahe an der oberen geschlossenen Endscheibe 20 im Inneren des Filterelements 3, also reinseitig.

Der Entgasungseinsatz 38 kann besonders einfach zur Nachrüstung herkömmlicher Flüssigkeitsfilter 1 verwendet werden, um den erfindungsgemäßen Flüssigkeitsfilter 1 mit der Entgasungseinrichtung 17 zu realisieren. Der Entgasungseinsatz 38 wird hierzu in das herkömmliche Gehäuse 2 eingebaut.

Im Unterschied dazu zeigt Fig. 3 eine Ausführungsform, bei der ein anderer Entgasungseinsatz 38' realisiert ist, der sich von dem in Fig. 2 gezeigten Entgasungseinsatz 38 dadurch unterscheidet, dass er nicht in das Gehäuse 2, sondern direkt in das Filterelement 3 eingebaut ist. Hierzu ist das Steigrohr 39 über zwei Abstützelemente 41 an einer Innenzarge 42 des Filterelements 3 abgestützt. Hierdurch kann das Steigrohr 39 im Filterelement 3 gezielt so positioniert werden, dass sich die Ansaugöffnung 14 beabstandet zur oberen Endscheibe 20 befindet und dass die Austrittsöffnung 15 in den Ablauf 5 hineinragt. Die Entgasungseinrichtung 38 bzw. 38' bildet ein separates Bauteil zum Gehäuse 2 und zum Filterelement 3 und kann -je nach Ausführungsform - in das Gehäuse 2 oder in das Filterelement 3 eingebaut werden. Insbesondere kann mit Hilfe eines derartigen Entgasungseinsatzes 38, 38' ein herkömmliches Flüssigkeitsfilter 1 besonders einfach und kostengünstig nachgerüstet bzw. umgerüstet werden, um die vorgestellte Entgasungseinrichtung 17 zu realisieren.

Bei einer anderen Ausführungsform ist es grundsätzlich möglich, die Entgasungseinrichtung 17 in das Filterelement 3 zu integrieren. Beispielsweise kann die Steigleitung 39 in die Innenzarge 42 integriert bzw. integral daran ausgeformt sein. Ebenso lassen sich die Austrittsöffnung 15 und die Ansaugöffnung 14 integral an der Innenzarge 42 ausformen.

Bei der in Fig. 1 gezeigten Ausführungsform ist im Gehäuse 2 außerdem ein Bypassraum 43 ausgebildet. Dieser Bypassraum 43 ist mit der Reinseite 10 direkt fluidisch verbunden. Ferner ist der Bypassraum 43 mit der Rohseite 9 indirekt, nämlich über ein Bypassventil 44 fluidisch verbunden. Das Bypassventil 44 ist so eingestellt, dass es ab einem vorbestimmten Überdruck zwischen Rohseite 9 und Reinseite 10 öffnet, um ein weiteres Ansteigen der Druckdifferenz zwischen Rohseite 9 und Reinseite 10 zu vermeiden. Bei geöffnetem Bypassventil 44 kann die Flüssigkeit von der Rohseite 9 in den Bypassraum 43 gelangen und somit unter Umgehung des Filterelements 3 direkt zur Reinseite 10 gelangen. Hierdurch kann eine Beschädigung des Hydrauliksystems bzw. des Filterelements 3 vermieden werden. Bei der in Fig. 1 gezeigten Ausführungsform ist der Bypassraum 43 im Deckel 22 untergebracht. Ferner mündet die Ansaugöffnung 14 hier in den Bypassraum 43. Hierdurch kann eine besonders hohe Funktionsdichte im Deckel 22 realisiert werden.

Die in den Fig. 2 und 3 gezeigten Ausführungsformen besitzen ebenfalls ein Bypassventil 44, das jedoch im Sockel 21 angeordnet ist und dort einen Bypass unter Umgehung des Filterelements 3 ermöglicht, wenn die Druckdifferenz zwischen Rohseite 9 und Reinseite 10 einen vorbestimmten Grenzwert übersteigt.

Um die hier vorgestellte Entgasungseinrichtung 17 hinsichtlich ihrer Wirkungsweise zusätzlich zu verbessern, kann es vorgesehen sein, den Ablauf 5 bzw. den Ablaufkanal 6 als Venturidüse auszugestalten, wobei dann die jeweilige Austrittsöffnung 15 im Bereich des engsten Querschnitts der Venturidüse positioniert wird. Eine derartige Venturidüse charakterisiert sich dadurch, dass in der Durchströmungsrichtung der durchströmbare Querschnitt zunächst bis auf einen engsten Querschnitt abnimmt und danach wieder zunimmt.

Das hier vorgestellte Flüssigkeitsfilter 1 arbeitet wie folgt:
Das Filterelement 3 trennt im Gehäuse 2 die Rohseite 9 von der Reinseite 10. In einem reinseitigen ersten Bereich, hier im oberen Bereich 13, insbesondere im Bypassraum 43, kann sich Gas ansammeln, beispielsweise bei einem Filterelementwechsel oder bei einem längeren Stillstand des Hydrauliksystems. Dieser erste Bereich 13 ist über die jeweilige Verbindungsleitung 16 mit einem reinseitigen zweiten Bereich fluidisch verbunden. Dieser zweite Bereich ist hier durch den Bereich des Ablaufs 5 gebildet. In diesem zweiten Bereich (5) herrscht in der Flüssigkeit im Betrieb des Filters 1 bzw. des Hydrauliksystems eine größere Strömungsgeschwindigkeit als im ersten Bereich 13. Hierdurch entsteht ein Druckgefälle vom ersten Bereich 13 zum zweiten Bereich (5). Über die Verbindungsleitung 16 kann folglich Gas über die Ansaugöffnung 14 aus dem ersten Bereich 13 angesaugt und über die Austrittsöffnung 15 in den zweiten Bereich (5) eingeleitet werden, wodurch das Gas von der strömenden Flüssigkeit abgeführt wird.

## Patentansprüche

1. Flüssigkeitsfilter, insbesondere Ölfilter,
- mit einem Gehäuse (2), das einen Aufnahmeraum (4) zur Aufnahme eines Filterelements (3) und einen Ablauf (5) für reinseitige Flüssigkeit aufweist,
- wobei das Filterelement (3) im Gehäuse (2) eine Rohseite (9) von einer Reinseite (10) trennt,
- wobei in einem im Einbauzustand oberen Bereich (13) des Gehäuses (2) zumindest eine Ansaugöffnung (14) angeordnet ist,
**dadurch gekennzeichnet,**
- **dass** der Ablauf (5) im Einbauzustand unten angeordnet ist,
- **dass** die Ansaugöffnung (14) auf der Reinseite angeordnet ist,
- **dass** im Bereich des Ablaufs (5) zumindest eine Austrittsöffnung (15) angeordnet ist,
- **dass** zumindest eine Verbindungsleitung (16) vorgesehen ist, welche die Ansaugöffnung (14) mit der Austrittsöffnung (15) fluidisch verbindet.

2. Flüssigkeitsfilter nach Anspruch 1,
**dadurch gekennzeichnet,**
- **dass** das Filterelement (3) einen ringförmigen Filterkörper (11) aufweist und im Einbauzustand bezüglich seiner Längsmittelachse (12) im Gehäuse (2) im Wesentlichen stehend angeordnet ist,
- wobei insbesondere vorgesehen sein kann, dass sich die Reinseite (10) im Inneren des Filterkörpers (11) befindet.

3. Flüssigkeitsfilter nach Anspruch 2,
**dadurch gekennzeichnet,**
- **dass** sich die Austrittsöffnung (15) im Bereich einer unteren Endscheibe (18) des Filterelements (3) befindet, und/oder
- **dass** sich die Ansaugöffnung (14) im Bereich einer oberen Endscheibe (20) des Filterelements (3) befindet.

4. Flüssigkeitsfilter nach einem der Ansprüche 1 bis 3,
**dadurch gekennzeichnet,**
**dass** das Gehäuse (2) unten einen den Ablauf (5) aufweisenden Sockel (21) und oben einen Deckel (22) zum Verschließen des Gehäuses (2) aufweist.

5. Flüssigkeitsfilter nach Anspruch 4,
**dadurch gekennzeichnet,**
- **dass** der Deckel (22) mit einer Verankerung (23) am Sockel (21) befestigt ist, die sich zentral, insbesondere koaxial, im Filterelement (3) erstreckt,
- **dass** die Ansaugöffnung (14), die Austrittsöffnung (15) und die Verbindungsleitung (16) in der Verankerung (23) ausgebildet sind.

6. Flüssigkeitsfilter nach Anspruch 5,
**dadurch gekennzeichnet,**
- **dass** die Verankerung (23) einen im oder am Deckel (22) drehbar gelagerten Knebel (24) aufweist, der ein Betätigungselement (25) aufweist, das an einer vom Aufnahmeraum (4) abgewandten Außenseite des Deckels (22) angeordnet ist,
- wobei insbesondere vorgesehen sein kann, dass das Betätigungselement (25) als Handgriff ausgestaltet ist und/oder einen Werkzeugeingriff aufweist,
- wobei insbesondere vorgesehen sein kann, dass der Knebel (24) die Ansaugöffnung (14) und einen zur Ansaugöffnung (14) führenden Abschnitt (26) der Verbindungsleitung (16) aufweist.

7. Flüssigkeitsfilter nach Anspruch 5 oder 6,
**dadurch gekennzeichnet,**
- **dass** die Verankerung (23) eine am Sockel (21) befestigte Zugstange (27) aufweist,
- wobei insbesondere vorgesehen sein kann, dass die Zugstange (27) die Austrittsöffnung (15) und einen zur Austrittsöffnung (15) führenden Abschnitt (29) der Verbindungsleitung (16) aufweist,
- wobei insbesondere vorgesehen sein kann, dass der Knebel (24) mit der Zugstange (27) verschraubbar ist.

8. Flüssigkeitsfilter nach einem der Ansprüche 4 bis 7,
**dadurch gekennzeichnet,**
**dass** der Deckel (22) über eine Mantelhülse (31) am Sockel (21) abgestützt ist.

9. Flüssigkeitsfilter nach einem der Ansprüche 1 bis 8,
**dadurch gekennzeichnet,**
- **dass** im Gehäuse (2) ein Bypassraum (43) ausgebildet ist, der mit der Reinseite (10) direkt fluidisch verbunden ist und der mit der Rohseite (9) über ein Bypassventil (44) fluidisch verbunden ist,
- wobei insbesondere vorgesehen sein kann, dass der Bypassraum (43) im Deckel (22) ausgebildet ist,
- wobei insbesondere vorgesehen sein kann, dass die Ansaugöffnung (14) im Bypassraum (43) mündet.

10. Flüssigkeitsfilter nach einem der Ansprüche 1 bis 5, 8 und 9,
**dadurch gekennzeichnet,**
- **dass** die Ansaugöffnung (14), die Austrittsöffnung (15) und die Verbindungsleitung (16) am Filterelement (3) oder am Gehäuse (2) integral ausgebildet sind, oder
- **dass** die Ansaugöffnung (14), die Austrittsöffnung (15) und die Verbindungsleitung (16) einen Entgasungseinsatz (38, 38') bilden, der als separates Bauteil in das Filterelement (3) oder in das Gehäuse (2) eingesetzt und/oder eingebaut ist.

11. Flüssigkeitsfilter nach einem der Ansprüche 1 bis 10,
**dadurch gekennzeichnet,**
- **dass** die zumindest eine Ansaugöffnung (14), die zumindest eine Austrittsöffnung (15) und die zumindest eine Verbindungsleitung (16) eine Entgasungseinrichtung (17) bilden, und/oder
- **dass** der Ablauf (5) oder ein mit dem Ablauf (5) verbundener Ablaufkanal (6) als Venturidüse ausgestaltet ist.

12. Verfahren zum Entgasen eines Flüssigkeitsfilters (1), insbesondere eines Ölfilters,
- wobei in einem Gehäuse (2) ein Filterelement (3) eine Rohseite (9) von einer Reinseite (10) trennt,
- bei dem ein reinseitiger erster Bereich (13), in dem sich Gas ansammeln kann, über mindestens eine Verbindungsleitung (16) mit einem reinseitigen zweiten Bereich (5) fluidisch verbunden wird, in dem im Betrieb des Flüssigkeitsfilters (1) in der Flüssigkeit eine Strömungsgeschwindigkeit herrscht, die größer ist als im ersten Bereich (13).

## Claims

1. A liquid filter, in particular oil filter,
- with a housing (2) that has a receiving chamber (4) for receiving a filter element (3), and a drain (5) for liquid on the clean side,
- wherein the filter element (3) in the housing (2) separates a raw side (9) from a clean side (10),
- wherein in the installed state, at least one suction opening (14) is arranged in the upper region (13) of the housing (2),
**characterized in**
- **that** in the installed state, the drain (5) is arranged at the bottom,
- **that** the suction opening (14) is arranged on the clean side,
- **that** in the region of the drain (5), at least one outlet opening (15) is arranged,
- **that** at least one connection line (16) is provided, which fluidically connects the suction opening (14) to the outlet opening (15).

2. The liquid filter according to claim 1,
**characterized in**
- **that** the filter element (3) has a ring-shaped filter body (11) and is arranged in the installed state in the housing (2) in a substantially vertical position with regards to its longitudinal centre axis (12),
- wherein it can in particular be provided that the clean side (10) is inside the filter body (11).

3. The liquid filter according to claim 2,
**characterized in**
- **that** the outlet opening (15) is located in the region of a lower end disc (18) of the filter element (3), and/or
- **that** the suction opening (14) is located in the region of an upper end disc (20) of the filter element (3).

4. The liquid filter according to any one of the claims 1 to 3,
**characterized in**
**that** at the bottom, the housing (2) has a base (21) comprising the drain (5), and at the top, the housing has a cover (22) for closing the housing (2).

5. The liquid filter according to claim 4,
**characterized in**
- **that** the cover (22) is fastened to the base (21) by means of an anchor (23) that extends centrally, in particular coaxially, within the filter element (3),
- **that** the suction opening (14), the outlet opening (15) and the connection line (16) are formed within the anchor (23).

6. The liquid filter according to claim 5, **characterized in**
- **that** the anchor (23) has a toggle (24) which is rotatably mounted in or on the cover (22) and which has an actuating element (25) that is arranged on an outside of the cover (22), which outside faces away from the receiving chamber (4),
- wherein it can in particular be provided that the actuating element (25) is configured as a handle and/or has a tool engagement portion,
- wherein it can in particular be provided that the toggle (24) comprises the suction opening (14) and a section (26) of the connection line (16), which section leads to the suction opening (14).

7. The liquid filter according to claim 5 or claim 6, **characterized in**
- **that** the anchor (23) has a drawbar (27) that is fastened to the base (21),
- wherein it can in particular be provided that the drawbar (27) comprises the outlet opening (15) and a section (29) of the connection line (16), which section leads to the outlet opening (15),
- wherein it can in particular be provided that the toggle (24) can be screwed together with the drawbar (27).

8. The liquid filter according to any one of the claims 4 to 7,
**characterized in**
**that** the cover (22) is supported on the base (21) via a casing sleeve (31).

9. The liquid filter according to any one of the claims 1 to 8,
**characterized in**
- **that** in housing (2), a bypass chamber (43) is formed, which is directly fluidically connected to the clean side (10) and is fluidically connected to the raw side (9) via a bypass valve (44),
- wherein it can in particular be provided that he bypass chamber (43) is formed within the cover (22),
- wherein it can in particular be provided that the suction opening (14) opens out in the bypass chamber (43).

10. The liquid filter according to any one of the claims 1 to 5, 8 and 9,
**characterized in**
- **that** the suction opening (14), die outlet opening (15) and the connection line (16) are integrally formed on the filter element (3) or on the housing (2), or
- **that** the suction opening (14), the outlet opening (15) and the connection line (16) form a degassing insert (38, 38') that is inserted and/or installed as a separate component in the filter element (3) or in the housing (2).

11. The liquid filter according to any one of the claims 1 to 10,
**characterized in**
- **that** the at least one suction opening (14), the at least one outlet opening (15) and the at least one connection line (16) form a degassing device (17), and/or
- **that** the drain (5) or a drain channel (6) connected to the drain (5) is configured as a Venturi nozzle.

12. A method for degassing a liquid filter (1), in particular an oil filter,
- wherein a filter element (3) in a housing (2) separates a raw side (9) from a clean side (10),
- in which a first region (13) on the clean side, in which region gas can accumulate, is fluidically connected via at least one connection line (16) to a second region (5) on the clean side, in which second region a flow velocity prevails in the liquid when the liquid filter (1) is in operation, which flow velocity is greater than in the first region (13).

## Revendications

1. Filtre à liquide, notamment filtre à huile,
- comportant un logement (2), qui présente un espace de réceptacle (4) pour recevoir un élément de filtre (3) et une évacuation (5) du liquide du côté purifié,
- dans lequel l'élément de filtre (3) sépare dans le logement (2) un côté purifié (9) d'un côté brut (10),
- dans lequel dans une zone supérieure (13) du logement (2) en l'état monté au moins une ouverture d'aspiration (14) est disposée,
**caractérisé en ce que**
- l'évacuation (5) est disposée au-dessous en l'état monté,
- **en ce que** l'ouverture d'aspiration (14) est disposée sur le côté purifié,
- au niveau de l'évacuation (5) au moins une ouverture de sortie (15) est disposée,
- au moins une conduite de liaison (16) est prévue, laquelle relie fluidiquement l'ouverture d'aspiration (14) à l'ouverture de sortie (15).

2. Filtre à liquide selon la revendication 1,
**caractérisé en ce que**
- l'élément de filtre (3) présente un corps de filtre (11) de forme annulaire et en l'état monté est disposé essentiellement à la verticale dans le logement (2) par rapport à son axe médian longitudinal (12),
- dans lequel il peut notamment être prévu que le côté purifié (10) se trouve à l'intérieur du corps de filtre (11).

3. Filtre à liquide selon la revendication 2, **caractérisé en ce que**
- l'ouverture de sortie (15) se trouve au niveau d'une rondelle d'extrémité inférieure (18) de l'élément de filtre (3), et/ou
- l'ouverture d'aspiration (14) se trouve au niveau d'une rondelle d'extrémité supérieure (20) de l'élément de filtre (3).

4. Filtre à liquide selon une des revendications 1 à 3,
**caractérisé en ce que**
le logement (2) présente au-dessous un socle (21) présentant l'évacuation (5) et au-dessus un couvercle (22) pour obturer le logement (2).

5. Filtre à liquide selon la revendication 4,
**caractérisé en ce que**
- le couvercle (22) est fixé par un ancrage (23) sur le socle (21), qui s'étend au centre, notamment coaxialement, dans l'élément de filtre (3),
- l'ouverture d'aspiration (14), l'ouverture de sortie (15) et la conduite de liaison (16) sont réalisées dans l'ancrage (23).

6. Filtre à liquide selon la revendication 5, **caractérisé en ce que**
- l'ancrage (23) présente un levier de commande (24) positionné rotativement dans ou sur le couvercle (22), qui présente un élément d'actionnement (25), qui est disposé sur un côté extérieur du couvercle (22) qui se détourne de l'espace de réceptacle (4),
- dans lequel il peut notamment être prévu que l'élément d'actionnement (25) soit conçu comme une poignée et/ou présente une poignée d'outil,
- dans lequel il peut notamment être prévu que le levier de commande (24) présente l'ouverture d'aspiration (14) et une portion (26) de la conduite de liaison (16) menant à l'ouverture d'aspiration (14).

7. Filtre à liquide selon les revendications 5 ou 6, **caractérisé en ce que**
- l'ancrage (23) présente une tige de traction (27) fixée sur le socle (21),
- dans lequel il peut notamment être prévu que la tige de traction (27) présente une ouverture de sortie (15) et une portion (29) de la conduite de liaison (16) menant à l'ouverture de sortie (15),
- dans lequel il peut notamment être prévu que le levier de commande (24) puisse être vissé à la tige de traction (27).

8. Filtre à liquide selon une des revendications 4 à 7,
**caractérisé en ce que**
le couvercle (22) est appuyé par l'intermédiaire d'un manchon enveloppant (31) sur le socle (21).

9. Filtre à liquide selon une des revendications 1 à 8,
**caractérisé en ce que**
- un espace de dérivation (43) est réalisé dans le logement (2), qui est relié fluidiquement directement au côté purifié (10) et qui est relié fluidiquement par l'intermédiaire d'une soupape de dérivation (44) au côté brut (9),
- dans lequel il peut notamment être prévu que l'espace de dérivation (43) soit réalisé dans le couvercle (22),
- dans lequel il peut notamment être prévu que l'ouverture d'aspiration (14) débouche dans l'espace de dérivation (43).

10. Filtre à liquide selon une des revendications 1 à 5, 8 et 9,
**caractérisé en ce que**
- l'ouverture d'aspiration (14), l'ouverture de sortie (15) et la conduite de liaison (16) sont réalisées en un seul tenant sur l'élément de filtre (3) ou sur le logement (2), ou
- l'ouverture d'aspiration (14), l'ouverture de sortie (15) et la conduite de liaison (16) forment un insert de dégazage (38, 38'), qui est inséré et/ou monté dans l'élément de filtre (3) ou dans le logement (2) comme un composant séparé.

11. Filtre à fluidique selon une des revendications 1 à 10,
**caractérisé en ce que**
- au moins une ouverture d'aspiration (14), au moins une ouverture de sortie (15) et au moins une conduite de liaison (16) forment un dispositif de dégazage (17), et/ou
- l'évacuation (5) ou le canal d'évacuation (6) relié à l'évacuation (5) est conçu comme une buse à effet Venturi.

12. Procédé de dégazage d'un filtre à liquide (1), notamment d'un filtre à huile,
- dans lequel dans un logement (2) un élément de filtre (3) sépare un côté brut (9) d'un côté purifié (10),
- sur lequel une première zone (13) du côté purifié, dans laquelle le gaz peut s'accumuler, est reliée fluidiquement par l'intermédiaire d'au moins une conduite de liaison (16) à une deuxième zone (5) du côté purifié, dans lequel lors du fonctionnement du filtre à liquide (1) une vitesse d'écoulement prédomine dans le logement, laquelle est plus grande qua dans la première zone (13).
